# EUROPEAN PATENT SPECIFICATION

(11) **EP 3 881 730 B1**
(45) Date of publication and mention of the grant of the patent: **01.03.2023**
(21) Application number: 20163782.4
(22) Date of filing: 17.03.2020
(51) Int. Cl.: A47J 31/44

(54) **COFFEE MACHINE VENTILATION CHANNEL**
BELÜFTUNGSKANAL FÜR KAFFEEMASCHINEN
CANAL DE VENTILATION DE LA MACHINE À CAFÉ

(43) Date of publication of application: 22.09.2021
(73) Proprietor: BSH Hausgeräte GmbH, 81739 München (DE)
(72) Inventor: Gortnar, Primoz, 1215 Medvode (SI); Lemez, Samo, 3327 Smartno ob Paki (SI); Solar, Lovro, 3330 Mozirje (SI)

(56) References cited:
- EP-A1- 3 081 124
- EP-A1- 3 482 659

## Description

The present invention relates to a coffee machine having a water tank, a housing comprising a housing as a closed space that is equipped with a pump, a brewing unit, a heater, a steam relief unit, a drip tray and a ventilation channel for removing a moisture from inside of the housing to the outside.

From the state of the art a different types of brewing machines e.g. automatic coffee machines, drip or capsule coffee makers are known. Those machines employ different systems for preparing beverages such as coffee, tea or chocolate. During the brewing process a portion of hot water passes through the coffee powder in order to prepare a coffee. For preparing cappuccino, the automated machine is provided with a steam conduit where a stream of the steam draws air into the pipe to mix it with steam and to froth a quantity of milk when the resulting mixture is admitted into a milk. The machine provides a certain pressure, water flow amount, time duration and temperature. In the operation of coffee machines, the use of hot water and steam creates a very high relative humidity inside the coffee machine. The air humidity may be distributed in an uncontrolled manner inside the appliance and in particular condenses at those points where the component temperature is the lowest, for example in the vicinity of a water tank. This effect can cause water vapor to condense on the cool surfaces and collect or drainage of water coming at these points. It is particularly problematic not only the further uncontrolled drainage of condensed water, but also generally the vaporization of the interior of the device in the area of control electronics.

Typically, brewing machines have a body with removable water tank for clear water, a pump which delivers the water to the heating source and then to the brewing unit. The coffee machine has a drip tray located at the bottom of the machine and adapted to collect the liquid - water or beverage generated during the brewing process during normal use.

The document EP3081124A1 discloses a coffee machine with a moist space, which is connected via a ventilation duct with an opening on an upper lid and via a fresh air opening with the environment, wherein the opening is arranged on the cover, so that it also serves as a drain opening for itself on the lid located liquid, which is discharged via the drain opening and the ventilation duct in the damp room. As a result, a simple but effective drying in the damp room can be created.

The document EP1372444A2 discloses a beverage brewer which comprises a storage tank adapted to contain a supply of liquid, and a metering chamber structured and arranged to be filled with a metered amount of liquid received from the storage tank via an inlet in communication therewith. A brewing chamber is structured and arranged to receive a beverage filter cartridge containing a dry beverage medium. A baffle in the storage tank is shiftable from an open position accommodating liquid flow between the storage tank and the metering chamber via its inlet to a closed position preventilation such flow and isolating the metering chamber from the storage tank. During a brewing cycle, liquid is delivered from the thus isolated metering chamber to the brewing chamber for combination with the beverage medium contained in the filter cartridge. At the conclusion of the brewing cycle, the baffle is returned to its open position, thereby allowing the metering chamber to be refilled with liquid received from the storage tank via its inlet. The invention is based on the general idea to provide a special ventilation duct in a coffee machine over which a humid chamber of the coffee machine ventilated and thus uncontrolled evaporation or uncontrolled condensation of water vapor inside a device can be reliably avoided.

The document EP3510902 A1 discloses a coffee machine having a body, a housing, a water tank, a pump, a brewing device for brewing coffee on basis of delivered ground coffee, a drip tray, a drip tray cavity and a ventilation system for providing air stream at least for transporting a coffee grinding aroma outside and the ventilation system is in communication with the drip tray cavity by an air guide channel for the purpose of removing moisture from the drip tray cavity and for improving temperature distribution inside the drip tray cavity. In that solution the ventilation system is arranged in the form of rigid or elastic tube as a one part body. Using the air guide channel, air movement is provided in this area, therefore balanced relative humidity inside of appliance with respect to ambience of appliance has been achieved to prevent the major humidity take-up, it helps balancing the inner and outer relative humidity. Moist air is transported from the drip tray cavity by the air guide channel to the ventilation system and then is removed outside the coffee machine. The connection between the air guide channel and the drip tray cavity and the ventilation system is made by welding or by putting on the flange or other way.

The document EP3482659A1 discloses a coffee machine having a housing comprising a housing side part and a housing front part, a water tank, a pump, a brewing unit, a heater, a steam relief unit, a drip tray and a drainage channel for draining water from a water compartment to the drip tray wherein the drainage channel is formed by a main profile of the housing front part and a covering profile of the housing side part. The present invention provides a simple and cheap two parts drainage channel build in the coffee machine housing which is responsible for reducing the steam and moisture volume inside the coffee machine. The drainage channel is created automatically during assembling process so the assembling time is greatly reduced.

Presented solutions do not provide cheap, easy to assemble and reliable technical solution for tight connecting rigid parts of the ventilation channel each other or to other parts for instance to housing in order to form an outlet of the ventilation channel in the said housing. During brewing process in coffee appliance inter alia a steam is generated. This steam is than guided out of the appliance trough diverse ventilation channels. In this channels the steam is condensing, therefore it is important to avoid any leakage of this condensed steam from a ventilation channel in to the appliance. In known technical solution for this reason usually is used labyrinths or they are sealed with a rubber gasket.

Problem which arises during use labyrinths or rubber gasket is that such solution are complicated and expensive or inconvenient for assembling the appliance. The rubber gasket can be curved or bent at assembling, what can caused that the ventilation channel is not sealed enough.

It is the object of the present invention to overcome problems associated with sealing the ventilation channel in coffee machines as described above and provide reliable and robust solution.

Another object of the invention is to decrease the number of coffee machine parts, therefore decrease the assembling time.

In accordance with the present invention, there is provided a coffee machine having a housing comprising a housing side part with an opening, a wet chamber, a ventilation channel for connecting the wet chamber with the opening and to the surrounding environment via a fresh air opening. The ventilation channel is formed by a main profile of the housing side part and a ventilation channel cover. The ventilation channel cover has an inner and an outer side edges, defining a cover front wall that is provided with at least one cut out groove arranged along and between the inner and the outer side edge. The cut out groove separates the cover front wall into sealing members, that form resilient sealing member.

Coffee machines employ different systems for preparing beverages such as coffee, tea or chocolate. During the brewing process a portion of hot water passes through the coffee powder in order to prepare a coffee. For preparing cappuccino, the automated machine is provided with a steam conduit where a stream of the steam draws air into the pipe to mix it with steam and to froth a quantity of milk when the resulting mixture is admitted into a milk. The machine provides a certain pressure, water flow amount, time duration and temperature. In the operation of coffee machines, the use of hot water and steam creates a very high relative humidity inside the coffee machine. The air humidity may be distributed in an uncontrolled manner inside the appliance and in particular condenses at those points where the component temperature is the lowest, for example in the vicinity of a water tank. This effect can cause water vapor to condense on the cool surfaces and collect or drainage of water coming at these points. It is particularly problematic not only the further uncontrolled drainage of condensed water, but also generally the vaporization of the interior of the device in the area of control electronics. Content of humidity is reduced by removing it out of the appliance by diverse ventilation channels. In this channels the steam is condensing, therefore it is important to avoid any leakage of this condensed steam from the ventilation channel in to the appliance. Known technical solution for this reason usually is used labyrinths or they are sealed with a flexible gasket. Such solution are complicated and expensive or inconvenient for assembling the appliance. The flexible gasket can be curved or bent at assembling, what can caused that the ventilation channel is not sealed enough. For this reason the ventilation channel is provided. The positive effect is that the risk that the sealing is not included or incorrectly mounted is eliminated.

In the preferred embodiment of the invention a cover front wall is provided with one cut out groove placed in the middle, between the inner and the outer side edge, that separates the cover front wall into two sealing members that form a resilient sealing member. The positive effect is that tightness of the connection is guaranteed for the typical application. The solution is cheap in the production and convenient during assembling.

Preferable the main profile is integrally built in the housing side part of the coffee machine which means that the main profile can be manufactured as a separate part or fixedly connected to the housing side part of the coffee machine or in other way the profile is arranged.

In the another preferred embodiment the ventilation channel cover is detachably fixed with the housing side part of the coffee machine, therefore the ventilation channel is easy to form, without using complicated, thereby expensive tools.

Preferable the main profile has a main ventilation channel form and the ventilation channel cover has a covering ventilation channel form. The main profile and the covering ventilation profile connected together create a simple shaped ventilation channel.

In the preferred embodiment the main profile and the housing side part are formed in one piece, and the ventilation channel cover is formed in one piece what means that the main profile and the housing side part are produced as one part in one injection moulding process. Respectively, the ventilation channel cover is produces in moulding injection process as well.

Preferable the main profile has a seat for receiving the sealing members, that is formed integrally with the housing side part, wherein at least in the one direction the seat is limited by a wall. The positive aspect of this is in that that side walls of the ventilation channel cover is placed in a trough that is form by the wall on the housing side part, so the ventilation channel cover is better protected from moving.

In the another preferred embodiment of the invention the cut out groove extends inside the cover front wall of the ventilation channel cover to a depth substantially equal distance between the inner and the outer side edges. Preferable a width of the cut out groove decreases the thickness of the cover front wall, to form the sealing members between 0,1 - 0,5 mm thick. The positive effect is in that the appropriate flexibility of the sealing members is provided.

Preferable the cut out groove is substantially in the shape of half oval or half ellipse or of the letter "u" or triangular. The positive effect of this in that the sealing member is durable and resistant to mechanical loads.

Another embodiment discloses a coffee machine where ventilation channel cover with the sealing member is molded in the one piece body of plastic. So, the low production costs are achieved.

The features of the invention believed to be novel are set forth with particularity in the appended claims. The invention itself, however, may be best understood by reference to the following detailed description of the invention, which describes an exemplary embodiment of the invention, taken in conjunction with the accompanying drawings.

Further benefits and advantages of the present invention will become apparent after a careful reading of the detailed description with appropriate reference to the accompanying drawings.

In the drawings:
- Fig. 1: exemplary shows a coffee machine isometric view.
- Fig. 2: shows a housing side part inner side.
- Fig. 3: shows a housing side part inner side in the another view.
- Fig. 4: shows a cross section of a ventilation channel, a housing side part and a ventilation channel cover assembled together.
- Fig. 5: shows an another cross section of a ventilation channel, a housing side part and a ventilation channel cover assembled together.

In cooperation with attached drawings, the technical contents and detailed description of the present invention are described thereinafter according to a preferable embodiment, being not used to limit its executing scope.

In the following description of the preferred embodiments of the present invention, similar identical reference numbers designate identical or comparable components.\

Typically, coffee machines employ different systems for preparing beverages such as coffee, tea or chocolate. During the brewing process a portion of hot water passes through the coffee powder in order to prepare a coffee. For preparing cappuccino, the automated machine is provided with a steam conduit where a stream of the steam draws air into the pipe to mix it with steam and to froth a quantity of milk when the resulting mixture is admitted into a milk. The machine provides a certain pressure, water flow amount, time duration and temperature. In the operation of coffee machines, the use of hot water and steam creates a very high relative humidity inside the coffee machine. The air humidity may be distributed in an uncontrolled manner inside the appliance and in particular condenses at those points where the component temperature is the lowest, for example in the vicinity of a water tank. Content of humidity is reduced by removing it out of the appliance by ventilation channels. In this channels the steam is condensing, therefore it is important to avoid any leakage of this condensed steam from the ventilation channel in to the appliance.

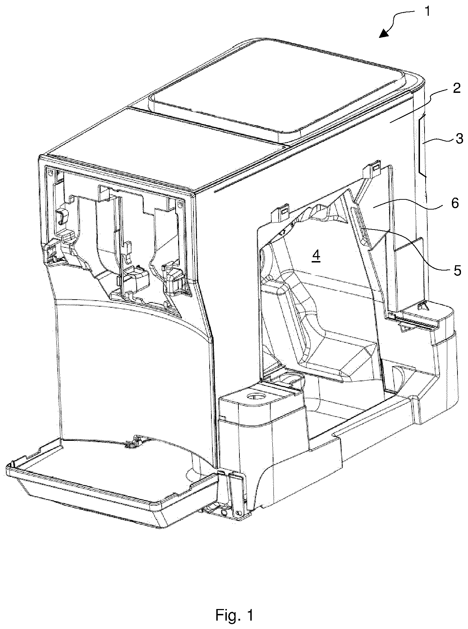

Fig. 1 shows a coffee machine an isometric view of a coffee machine having a housing 1 comprising a housing side part 2 with an opening 3, a wet chamber 4, a ventilation channel 5 for connecting the wet chamber 4 with the opening 3 and to the surrounding environment via a fresh air opening. The ventilation channel 5 is formed by a main profile 6 of the housing side part 2 and a ventilation channel cover 7 (not shown on this figure).

The coffee machine is equipped with a removable water tank and many components like a pump, a brewing unit, a heater, a steam relief unit, a milk frothing unit, sensors, valves etc. which are not shown on the figure but existence of which is necessary to carry out the brewing process.

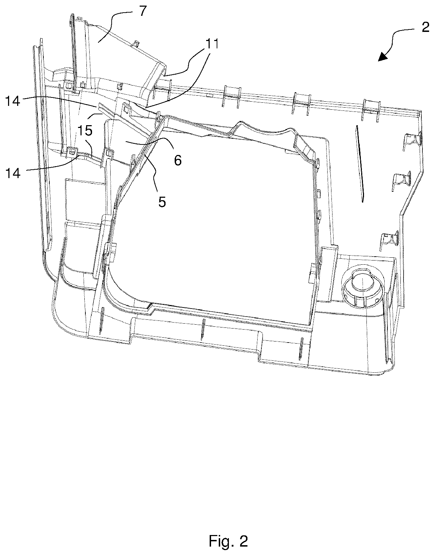

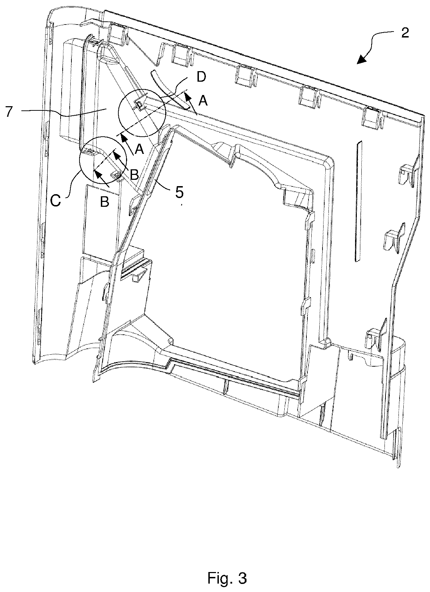

Fig. 2 and Fig. 3 show the housing side part 2 inner side and a ventilation channel cover 7 according to the invention in a state in which are not connected together (Fig.2) and connected together (Fig.3) accordingly. The ventilation channel cover 7 has two cover front walls 11 that are on the end side of the ventilation channel cover 7. The housing side part 2 has a main profile 6 that is limited by two pair of walls (15) integrally arranged on the housing side part 2. The ventilation channel 5 is formed after assembling together the ventilation channel cover 7 to the housing side part 2. The sealing between the said two part sis provided by sealing members 13 (not shown on this figure), that is arranged from cover front walls 11. The ventilation channel 5 fluidly connects the wet chamber 4 (not shown on this figure) with an opening 3 (not shown on this figure) that is arranged in the housing side part 2.

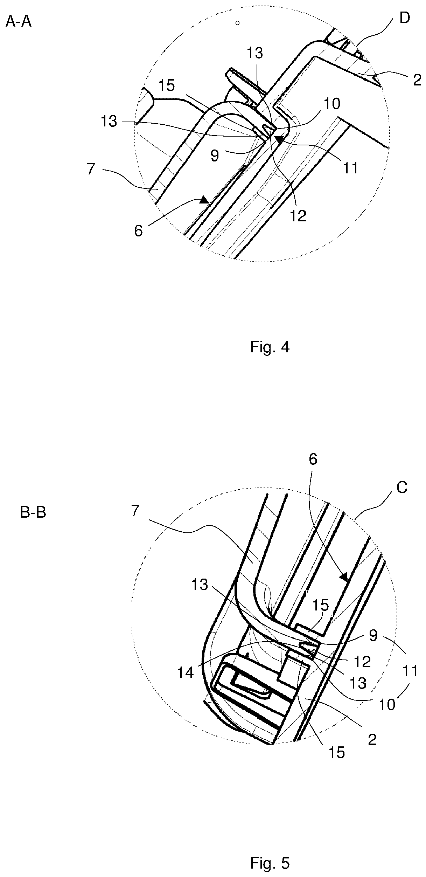

Fig. 4 and Fig.5 show magnified cross-sectional views of the ventilation channel 4. The ventilation channel 4 is formed by connected together a main profile 6 of the housing side part 2 and a ventilation channel cover 7. The ventilation channel cover 7 has an inner and an outer side edges 9, 10, defining a cover front wall 11. The cover front wall 11 is provided one triangular cut out groove 12 arranged along and in the middle between the inner and the outer side edge 9, 10 that separates the cover front wall 11 into two sealing members 13 that form resilient sealing member integrated with the ventilation channel cover 7 and formed as one piece. The main profile 6 is integrally built in the housing side part 2 of the coffee machine and they are formed as one piece. The ventilation channel cover 7 is detachably fixed with the housing side part 2 of the coffee machine by using latched. The main profile 6 has two seats 14 each limited by two walls 15 integrated with the housing side part 2. So, they form an elongated trough for receiving the ventilation channel cover 7 end side walls with having cover front walls 11 with the sealing members 13. The cut out groove 12 extends inside the cover front wall 11 of the ventilation channel cover 7 to a depth equal distance between the inner 9 and the outer 10 side edges. A width of the cut out groove 12 decreases the thickness of the cover front wall 11, to form the sealing members 13 of 0,2 mm thick. The sealing members 13 resiliently and tightly are pressed against the seat 14 by the latches to form sealed connection of the ventilation channel 4.

## Claims

1. A coffee machine having a housing (1) comprising a housing side part (2) with an opening (3), a wet chamber (4), a ventilation channel (5) for connecting the wet chamber (4) with the opening (3) and to the surrounding environment via a fresh air opening, wherein the ventilation channel (5) is formed by a main profile (6) of the housing side part (2) and a ventilation channel cover (7), **characterized in that** the ventilation channel cover (7) has an inner and an outer side edges (9, 10), defining a cover front wall (11) that is provided with at least one cut out groove (12) arranged along and between the inner and the outer side edge (9, 10) that separates the cover front wall (11) into sealing members (13) that form resilient sealing member.

2. A coffee machine according to claim 1, **characterized in that**, the cover front wall (11) is provided with one cut out groove (12) placed in the middle, between the inner and the outer side edge (9, 10), that separates the cover front wall (11) into two sealing members (13) that form a resilient sealing member.

3. A coffee machine according to claim 1 or 2, **characterized in that**, the main profile (6) is integrally built in the housing side part (2) of the coffee machine.

4. A coffee machine according to any of the preceding claims, **characterized in that** the ventilation channel cover (7) is detachably fixed with the housing side part (2) of the coffee machine.

5. A coffee machine according to any of the preceding claims, **characterized in that** the main profile (6) has a main ventilation channel form and the ventilation channel cover (7) has a covering ventilation channel form.

6. A coffee machine according to any of the preceding claims, **characterized in that** the main profile (6) and the housing side part (2) are formed in one piece, and the ventilation channel cover (7) are formed in one piece.

7. A coffee machine according to any of the preceding claims, **characterized in that**, the main profile (6) has a seat (14) for receiving the sealing members (13), that is formed integrally with the housing side part (2), wherein at least in the one direction the seat (14) is limited by a wall (15).

8. A coffee machine according to any of the preceding claims, **characterized in that**, the cut out groove (12) extends inside the cover front wall (13) of the ventilation channel cover (7) to a depth substantially equal distance between the inner (9) and the outer (10) side edges.

9. A coffee machine according to any of the preceding claims, **characterized in that**, a width of the cut out groove (12) decreases the thickness of the cover front wall (11), to form the sealing members (13) between 0,1 - 0,5 mm thick.

10. A coffee machine according to any of the preceding claims, **characterized in that**, the cut out groove (12) is substantially in the shape of half oval or half ellipse or of the letter "u" or triangular.

11. A coffee machine according to any of the preceding claims, **characterized in that**, the ventilation channel cover (7) with the sealing member (13) is molded in the one piece body of plastic.

## Patentansprüche

1. Kaffeemaschine mit einem Gehäuse (1), das einen Gehäuseseitenteil (2) mit einer Öffnung (3), eine Nasskammer (4), einen Lüftungskanal (5) zum Verbinden der Nasskammer (4) mit der Öffnung (3) und der Umgebung über eine Frischluftöffnung umfasst, wobei der Lüftungskanal (5) von einem Hauptprofil (6) des Gehäuseseitenteils (2) und einer Lüftungskanalabdeckung (7) gebildet wird, **dadurch gekennzeichnet, dass** die Lüftungskanalabdeckung (7) einen Innen- und einen Außenseitenrand (9, 10) aufweist, die eine vordere Abdeckungswand (11) definieren, die mit mindestens einer Rille (12) versehen ist, welche an dem Innen- und dem Außenseitenrand (9, 10) entlang zwischen den beiden Rändern vorgesehen ist und die vordere Abdeckungswand (11) in Dichtungselemente (13) unterteilt, die ein elastisches Dichtungselement bilden.

2. Kaffeemaschine nach Anspruch 1, **dadurch gekennzeichnet, dass** die vordere Abdeckungswand (11) mit einer Rille (12) versehen ist, die in der Mitte zwischen dem Innen- und dem Außenseitenrand (9, 10) angeordnet ist und die vordere Abdeckungswand (11) in zwei Dichtungselemente (13) unterteilt, die ein elastisches Dichtungselement bilden.

3. Kaffeemaschine (10) nach Anspruch 1 oder 2, **dadurch gekennzeichnet, dass** das Hauptprofil (6) in den Gehäuseseitenteil (2) der Kaffeemaschine integriert ist.

4. Kaffeemaschine nach einem der vorhergehenden Ansprüche, **dadurch gekennzeichnet, dass** die Lüftungskanalabdeckung (7) lösbar an dem Gehäuseseitenteil (2) der Kaffeemaschine befestigt ist.

5. Kaffeemaschine nach einem der vorhergehenden Ansprüche, **dadurch gekennzeichnet, dass** das Hauptprofil (6) eine Hauptlüftungskanalform und die Lüftungskanalabdeckung (7) eine den Lüftungskanal abdeckende Form aufweist.

6. Kaffeemaschine nach einem der vorhergehenden Ansprüche, **dadurch gekennzeichnet, dass** das Hauptprofil (6) und der Gehäuseseitenteil (2) einstückig ausgebildet sind und die Lüftungskanalabdeckung (7) ebenfalls.

7. Kaffeemaschine nach einem der vorhergehenden Ansprüche, **dadurch gekennzeichnet, dass** das Hauptprofil (6) einen Sitz (14) zum Aufnehmen der Dichtungselemente (13) aufweist, der in den Gehäuseseitenteil (2) integriert ist, wobei der Sitz (14) zumindest in einer Richtung durch eine Wand (15) begrenzt ist.

8. Kaffeemaschine nach einem der vorhergehenden Ansprüche, **dadurch gekennzeichnet, dass** die Rille (12) in der vorderen Abdeckungswand (13) der Lüftungskanalabdeckung (7) in einer Tiefe verläuft, die im Wesentlichen einem Abstand zwischen dem Innen- (9) und dem Außenseitenrand (10) entspricht.

9. Kaffeemaschine nach einem der vorhergehenden Ansprüche, **dadurch gekennzeichnet, dass** sich durch eine Breite der Rille (12) die Dicke der vorderen Abdeckungswand (11) so verringert, dass die Dichtungselemente (13) 0,1 bis 0,5 mm dick sind.

10. Kaffeemaschine nach einem der vorhergehenden Ansprüche, **dadurch gekennzeichnet, dass** die Rille (12) im Wesentlichen die Form eines halben Ovals oder einer halben Ellipse oder des Buchstabens "u" oder eines Dreiecks aufweist.

11. Kaffeemaschine nach einem der vorhergehenden Ansprüche, **dadurch gekennzeichnet, dass** die Lüftungskanalabdeckung (7) mit dem Dichtungselement (13) in das einstückige Kunststoffteil eingeformt ist.

## Revendications

1. Machine à café ayant une enveloppe (1) comprenant une partie latérale d'enveloppe (2) dotée d'une ouverture (3), une chambre humide (4), un canal de ventilation (5) pour raccorder la chambre humide (4) à l'ouverture (3) et au milieu environnant via une ouverture pour de l'air frais, dans laquelle le canal de ventilation (5) est formé par un profilé principal (6) de la partie latérale d'enveloppe (2) et un capot de canal de ventilation (7), **caractérisé en ce que** le capot de canal de ventilation (7) possède des bords latéraux interne et externe (9, 10), définissant une paroi avant de capot (11) qui est munie d'au moins une rainure découpée (12) agencée le long et entre les bords latéraux interne et externe (9, 10) qui sépare la paroi avant de capot (11) en organes d'étanchéité (13) qui forment un organe d'étanchéité élastique.

2. Machine à café selon la revendication 1, **caractérisée en ce que** la paroi avant de capot (11) est munie d'une rainure découpée (12) placée au milieu, entre les bords latéraux interne et externe (9, 10), qui sépare la paroi avant de capot (11) en deux organes d'étanchéité (13) qui forment un organe d'étanchéité élastique.

3. Machine à café selon la revendication 1 ou 2, **caractérisée en ce que** le profilé principal (6) est construit de manière solidaire dans la partie latérale d'enveloppe (2) de la machine à café.

4. Machine à café selon l'une quelconque des revendications précédentes, **caractérisée en ce que** le capot de canal de ventilation (7) est fixé de manière détachable à la partie latérale d'enveloppe (2) de la machine à café.

5. Machine à café selon l'une quelconque des revendications précédentes, **caractérisée en ce que** le profilé principal (6) possède une forme de canal de ventilation principal et le capot de canal de ventilation (7) possède une forme de canal de ventilation de recouvrement.

6. Machine à café selon l'une quelconque des revendications précédentes, **caractérisée en ce que** le profilé principal (6) et la partie latérale d'enveloppe (2) sont formés d'un seul tenant, et le couvercle de canal de ventilation (7) est formé d'un seul tenant.

7. Machine à café selon l'une quelconque des revendications précédentes, **caractérisée en ce que** le profilé principal (6) possède un siège (14) pour la réception des organes d'étanchéité (13), qui est formé de manière solidaire avec la partie latérale d'enveloppe (2), dans laquelle, au moins dans une direction, le siège (14) est limité par une paroi (15).

8. Machine à café selon l'une quelconque des revendications précédentes, **caractérisée en ce que** la rainure découpée (12) s'étend à l'intérieur de la paroi avant de capot (13) du capot de canal de ventilation (7) jusqu'à une profondeur sensiblement équidistante entre les bords latéraux interne (9) et externe (10).

9. Machine à café selon l'une quelconque des revendications précédentes, **caractérisée en ce qu'**une largeur de la rainure découpée (12) diminue l'épaisseur de la paroi avant de capot (11), pour former les organes d'étanchéité (13) entre 0,1 et 0,5 mm d'épaisseur.

10. Machine à café selon l'une quelconque des revendications précédentes, **caractérisée en ce que** la rainure découpée (12) se présente sensiblement sous la forme d'un demi-ovale ou d'une demi-ellipse ou de la lettre « u » ou est triangulaire.

11. Machine à café selon l'une quelconque des revendications précédentes, **caractérisée en ce que** le capot de canal de ventilation (7) doté de l'organe d'étanchéité (13) est moulé dans le corps en un seul tenant de matière plastique.
